# EUROPEAN PATENT APPLICATION

(11) **EP 0 895 925 A1**
(43) Date of publication of application: **10.02.1999**
(21) Application number: 98904177.7
(22) Date of filing: 25.02.1998
(51) Int. Cl.: B62H 5/00

(54) **ANTITHEFT DEVICE FOR MOTOR VEHICLES WITH ACCELERATOR IN THE HANDGRIP OF THE HANDLEBAR**

(30) Priority: 25.02.1997 ES 9700040
(71) Applicant: Martinez Fernandez, Fernando, 08028 Barcelona (ES); Fernandez Nacarino, Manuel, 08028 Barcelona (ES)
(72) Inventor: Martinez Fernandez, Fernando, 08028 Barcelona (ES); Fernandez Nacarino, Manuel, 08028 Barcelona (ES)
(74) Representative: Urizar Anasagasti, José Antonio
(86) International application number: ES9800042
(87) International publication number: WO9838075

(57) **Abstract**

The invention relates to an antitheft device for motor vehicles with accelerator in the handgrip (1) of the handlebar. The device provides for the locking of the handgrip through a locking sheet (2) which emerges by vertical displacement above the external surface of said handgrip in parking, stop or idle conditions, through orifices (7, 8) provided in the handlebar (4) and in the handgrip. Said motion of the sheet (2) is obtained by the rotation of an axis (3) situated inside the handlebar (4) which is provided at its extremity with a pivot (10) which is inserted into a horizontal slot (2c) of the sheet (2). This system provides means for obtaining the sheet (2) and preferably comprises an intermediary hollow cylinder (6) having dimensions which are sufficient to house without any play the sheet (2) in a fixed position with respect to the handlebar (4). There are also provided means for locking and opening the antitheft device, said means consisting preferably of a key-lock set (5).

## Description

An antitheft device for motor vehicles with a throttle in the handgrip of the handlebar, such as motorcycles, moped, three wheeled motorcycles or similar, having substantial advantages with respect to known means used for that purpose.

At present and due to security problems, specially in the case of towns with large populations, the motor vehicle owners are forced to use some antitheft devices when the vehicle is stationed at a parking area, with the purpose to avoid the theft of the vehicle. Many different vehicle antitheft devices are known.

In particular, different types of motor vehicle antitheft devices are known for vehicles of the type having a driving handlebar, such as motorcycles, moped or similar. Thus, for example, a conventional device consists of a chain for fastening the traction wheel to a piece of street furniture like a lamp pole or a chair, etc., and closing the chain by means of a lock. However, this type of antitheft system requires in many cases the use of several chains to fasten the different vehicle parts, causing inconveniences to the user. Also, the user takes a risk every time he stationes his vehicle and depending of a fixed street element so that very often he cannot station in a place protected from weather specially when being in the country.

Other type of antitheft device is also known, said device consisting of an U shape metal part having ends which can be closed by means of a flat metal part, designed to be able to block the traction wheel and to prevent a complete turn as said antitheft device will get blocked with the vehicle frame or chassis. However, said devices, as in the case described above, require that at least one of the vehicle wheels is provided with radii in order to fasten the antitheft device from one side to the other side. Furthermore, the manufacturing materials for this type of antitheft device are to be very strong materials, preferably of metal, thus increasing substantially the cost of the final product.

Finally, another type of device is known, which can block the driving system by means of a flexible bar with its ends fastened to two portions of vehicle, preferably the chassis and the handlebar, and closing at least one end of said flexible bar by means of a locking device. However, said antitheft devices can easily be unlocked by an expert having an appropiate tool to break or cut said flexible bar or some of the anchoring points to the vehicle.

In the other hand, most known antitheft devices have been designed as auxiliary equipment, not incorporated into the vehicle, having to carry them on said vehicle, this implying some difficulties in having a proper housing for said devices, specially in vehicles with very limited space, such as motorcycles, moped and similar. Also, it must be emphasized that the vehicle would be fully unprotected in the case that its owner did not apply the corresponding antitheft device, as said device is considered an auxiliary, independent piece of equipment.

This way, most known antitheft devices for vehicles having the throttle mounted in the handgrip of the handlebar are not convenient for the vehicle user, specially in the case of vehicles used as a labor equipment, as it is the case of postmen, couriers, etc.

With the purpose to avoid the inconveniences produced by the antitheft devices in motor vehicles having a driving handlebar with the throttle in the handgrip of said handlebar, an antitheft device has been developed for motor vehicles with the throttle in the handgrip of the handlebar, as the object of this invention.

The present invention discloses an antitheft device tor motor vehicles with the throttle in the handgrip of the handlebar, such as motorcycles, moped, three wheeled cycles and similar, of the type comprising:
- a shaft, preferably with cylindrical shape, made of a strong material, preferably solid steel, located inside the throttle handgrip of the vehicle handlebar, and therefore of a diameter slightly smaller than the handlebar diameter;
- one or several locking means fastened to said shaft able to project from side surface of said shaft, such that the distance from the said shaft center line to the free end of said blocking means, arranged in radial position (perpendicular to said shaft) is longer than the outside diameter of the handgrip of the vehicle handlebar;
- fastening means for fastening said locking means to said shaft;
- means for fastening and fixing said shaft, preferably of cylindrical shape, to the vehicle handlebar;
- means for engagement and disengagement of the antitheft device, consisting preferably of a lock-key set, said lock being preferably arranged on the shaft base oriented towards the exterior face of the handlebar handgrip and, in any case, having access from outside; and
- a series of openings in the handlebar and another series of openings in the throttle handgrip, each pair of holes aligned by pairs, the number of pairs being equal to the number of locking means arranged on said shaft, having a dimension corresponding to that of locking means, and arranged in positions facing those of said locking means with the corresponding pair of openings in handlebar and throttle handgrip, in parking, stop or deadpoint vehicle position,
characterized in that said locking means consist of a single plate, or locking plate, made preferably of a material such as stainless steel or similar, capable to slide in vertical direction from a first locking position, corresponding to the actuation of the antitheft device, or in counter direction, with the main faces preferably arranged in parallel to cross section of the vehicle handlebar and interior cylindrical shaft, with a preferred substantially rectangular shape with upper and lower sides slightly rounded, preferably adapted to the bending radius of the interior cylindrical shaft, located in the lower end of the interior cylindrical shaft, said shaft having an horizontal groove located in the central portion of said plate and extending partially along the horizontal dimension of said plate, preferably from one side towards said central portion, and in that the fastening means of said interior cylindrical shaft with said plate comprising a projection or stem provided preferably on a point near the perimeter of the end base connected to said interior cylindrical shaft adjacent to said locking means, having adequate dimensions as to be inserted in said groove of said locking plate.

Said locking means has, preferably, a maximum height 9 times the minimum thickness and a maximum width 7 times the minimum thickness.

The own locking plate is provided with holding means to be held in position and allow for a vertical displacement from the blocking position and the release position, consisting preferably of an intermediate hollow cylinder fixed with respect to the vehicle handlebar. Said intermediate cylinder is to be provided with an opening to allow for a locking plate be inserted through it and aligned with the hole located on own vehicle handlebar and, in the case that the vehicle is stopped, will be aligned with the hole located in the handgrip. Said intermediate hollow cylinder is preferably made of a strong material such as stainless steel or similar, fastened to the vehicle handlebar by any adequate fastening means such as welding, threaded pin, a ratchet device with housing for at least a shoulder with spring or similar, which also could be integrated in its own structure. The dimensions of said intermediate hollow cylinder should be such that the space between interior end and the interior shaft end is sufficient to house tightly the locking plate. In other words, the gap between both interior ends should be substantially equal to the blocking plate thickness.

Finally, with the purpose to enhance the sliding of the locking plate inside the gap between the intermediate hollow cylinder and the interior shaft, thus reducing the friction wear of the locking plate and of said cylinders, and in order to increase the life of components the system will be provided with conventional lubrication means such as oil, synthetic or natural grease or similar in said remaining space.

Thus, the arrangement of the antitheft device as described above for motor vehicles with an throttle in the handlebar handgrip, object of the present invention, will allow for the locking of the vehicle throttle when parked and, optionally, at a standstill point.

From all above description one can easily understand the advantages provided by the antitheft device for motor vehicles with a throttle in the handlebar handgrip object of this invention, such as the convenience and easy use, as well as the face of being incorporated to the vehicle like another part thereof and not as an auxiliary independent part, what might mean the loss or theft of it, with the advantage of an easy carrying. Furthermore, the means for fastening and stiffening the structure help said device to be an efficient antitheft element.

In order to better understand the object of the present invention a practical preferred embodiment of the antitheft device for motor vehicles with throttle in the handgrup of the handlebar is described below, with reference to enclosed figures. Said figures show:
Figures 1a and 1b show, respectively, a cross section and a section along the axis of a practical preferred embodiment of the antitheft device for motor vehicles with throttle in the handgrip of the handlebar, in its actuated or locking condition.
Figures 2a and 2b show, respectively, a cross section and a section along the axis of the practical preferred embodiment of the antitheft device for motor vehicles with throttle in the handgrip of the handlebar in its non actuated or unlocking condition.

As it is shown in said figures, the antitheft device for motor vehicles with throttle in the handgrip of the handlebar consists of locking the handgrip (1) throttle by means of a locking plate (2) projecting above the exterior surface of said handgrip (1) from a steel cylindrical shaft (3) mounted inside the vehicle handlebar (4) through a series of holes (7, 8) arranged in the handlebar (4) and the handgrip (1), respectively, said holes being arranged in a way facing the locking plate (2) when the vehicle is at a standstill. Said holes (7,8) have adequate dimensions to allow for the introduction through said holes of the locking plate (2) which when projecting above the upper surface of the handlebar(4) handgrip(1) will activate the antitheft device. The locking and release of the antitheft device is done by means of a lock-key set (5) mounted on the interior shaft (3) base oriented towards outside the throttle handgrip (1).

Said locking plate (2) is arranged having its main faces preferably parallel to vehicle handlebar (4) and interior cylindrical shaft (3) cross section.

With the purpose to hold the locking plate (2) in position, allowing for the adequate displacement to carry out locking/release operations of the antitheft device, an intermediate hollow cylinder (6) will be provided in a fixed position with respect to vehicle handlebar (4), said intermediate hollow cylinder having a opening (9) that allows for the introduction through said opening of a locking plate (2) and aligned with the opening (7) provided in the vehicle handlebar (4) and, when the vehicle is stopped said opening will also be aligned with the opening (8) located in handlebar (4) handgrip (1). Said intermediate hollow cylinder (6) is preferably made of a metal suach as stainless steel or similar and is fastened to the vehicle handlebar (4) by any adequate fastening means such as welding, bolt, ratchet device with housing for at least a shoulder with spring or similar or even being incorporated to its own structure. The dimensions of said intermediate hollow cylinder (6) should be such that the locking plate can get with no clearances into the space between the end inside and the interior end of said interior shaft (3) That is, the distance d₁ between both interior ends of said cylinders will be substantially equal to thickness e₁ of said locking plate (2).

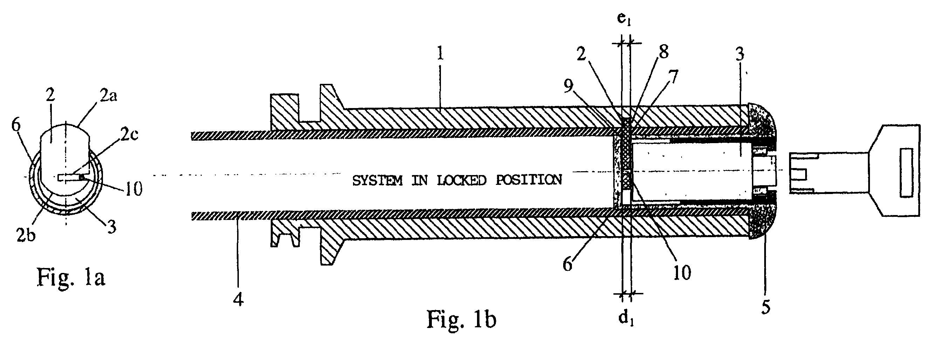

In particular, as it can be seen in the cross sections views shown in Figures 1a and 2a, the locking plate (2) is of substantially rectangular shape with rounded upper side (2a) and lower side (2b), with bending radius preferably matching that of vehicle handlebar (4), and in all cases with adequate dimensions to be fully inserted inside thje vehicle handlebar (4) when in release condition and, preferably, with dimensions matching those of the intermediate hollow cylinder (6) cross section. Said locking plate (2) has an horizontal groove (2c) located in centralportion of said locking plate (2) extending, preferably, from one side to approximately said central portion.

The fastening means between the interior cylindrical shaft (3) and the locking plate (2) constitute, as it will be described with more detail, the own actuation means, consisting of a small pivot (10) projecting from interior end of said cylindrical shaft (3) perpendicular to its base, with adequate dimensions to be inserted permanently in the locking plate (2) horizontal groove (2c), through said horizontal groove (2c).

Also, it must be emphasized that the lock-key set (5) for the locking and release of the antitheft device is mounted on the interior shaft (3) base oriented towards the exterior of the throttle handgrip (1) and solidly fastened with said interior shaft (3) by means of some conventional fastening means, so that a turn of the key causes directly the turno of said interior shaft (3).

From the arrangement described above and shown in enclosed figures, it can be easily understood the operation of the antitheft device with respect to the sequence of locking and release of the vehicle throttle handgrip (1).

Figures 1a and 1b show the arrangement of the antitheft device in the actuated or locking condition. In this position, the locking plate (2) projects through corresponding openings (7, 8, 9) found respectively in the handlebar (4), handgrip (1) and intermediate cylinder (6), and prevents the turning of the vehicle throttle handgrip (1). Said position of the locking plate (2) is obtained by the displacement of said plate forced by the interior shaft (3) pivot (10) housed in the horizontal groove (2c) of said locking plate, caused by the interior cylinder (3) turn when actuated by the key of the lock-key set (5).

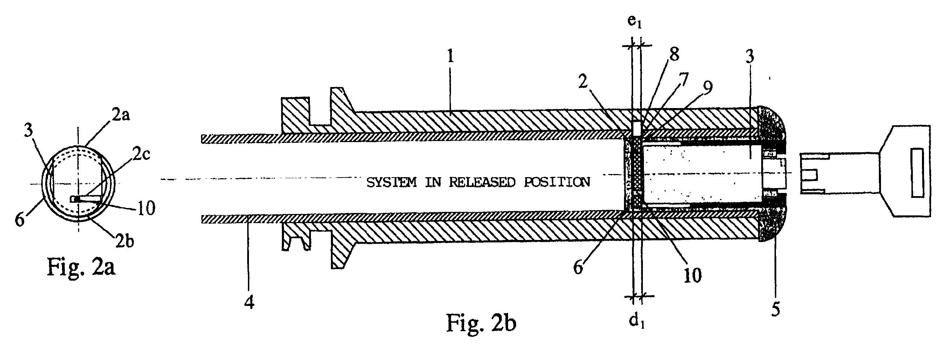

Figures 2a and 2b show the position of the antitheft device in the non actuated or release condition. Said release condition is reached when the locking plate is inserted into the vehicle handlebar (4). The displacement of said locking plate (2) is caused by the turn of α angle of the interior shaft (3) transmitted by the turn of the lock-key set (5). Said α angle turn causes the displacement of interior shaft (3) pivot (10) housed in the horizontal groove (2c) from one end to another end of said horizontal groove (2c). The pivot (10) displacement along the horizontal groove (2) together with the own pivot (10) turn causes the vertical downwards displacement of the locking plate (2) to its release position represented in figures 2a and 2b. Consequently the turning α angle will correspond with the pivot (10) displacement from one end of the horizontal groove (2c) of the locking plate (2) to the other end, to slide the locking plate (2) from the locking position to the release position and viceversa. In the present practical embodiment, the turning α angle corresponds to 90 degrees.

In this manner, the locking and release operations can be efficiently made by vertical forward and downward displacement of the locking plate (2), actuated by the turn of the interior shaft (3) causing the displacement of the pivot (10) along the horizontal groove (2c) in the locking plate (2). Said interior shaft (3) turn is directly caused by means of the lock-key set (6).

The locking plate (2), when projecting out of the lock (6) cylinder, preferably one fourth of said plate height, sufficient to extend from handlebar tube (4) and get inserted inside the throttle handgrip, without coming out of same, while in the release position said locking plate (2) will not project out of the lock (6) cylinder. The locking and release operations are directed by means of the key (5) which by a 90 degree turn makes the lock (6) interior cylinder turn also 90 degrees, pushing the locking plate (2) by means of the pivot moving inside the groove (2c) in the locking plate (2).

With the purpose to improve the displacement of the locking plate (2) in the gap between the intermediate hollow cylinder (6) and the interior shalt (3), thus reducing the wear caused by friction between locking plate (2) and said cylinders, and therefor increase the life of the components, said gap will be provided with conventional lubrication means, such as oil, synthetic or natural grease or similar.

As it can be noted, the device object of present invention is not provided with any automatic means to extract or collect the locking plate, this operation being made simply by pushing or drawing said plate.

Once the nature of present invention as well as an embodiment of same haves been described sufficiently, we only have to add that it will be possible to introduce changes of shape, materials and arrangement in the assembly and its componentes, as long as these alterations do not substantially affect the characteristics of the invention as claimed hereinafter.

## Claims

1. Antitheft device for motor vehicles, with a throttle in the handlebar handgrip, such as motorcycles, moped, three wheeled motorcycles and similar, of the type comprising a preferably cylindrical shaft (3) mounted inside the throttle handgrip (1) in the vehicle handlebar (4), one or several locking means fixed to said shaft (3) capable of projecting out of said cylindrical shaft (3) side surface, means for fastening said locking means to said shaft, means for fastening said prefereably cylindrical shaft (3) to the vehicle handlebar (4) and exterior locking means such as a lock-key set (5) and a series of openings/, 8) in the handlebar (4) and in the throttle handgrip (1), **characterized in that** said locking means consist of a unique plate or locking plate (2), preferably made of a metal such as stainless steel or similar, adequate to slide vertically from a first locking position of the antitheft device to a second release position of saif antitheft device, and viceversa, having its main surfaces preferably arranged in parallel to vehicle handlebar (4) and interior cylindrical shaft (3) cross sections, having preferably a substantially rectangular shape with rounded upper (2a) and lower (2b) sides, having a bending radius matching that of the vehile handlebar (4), said locking plate (2) also being provided with an horizontal groove (2c) located in the central portion of the locking plate (2) and extending preferably from one side up to about the central portion of said locking plate (2), said locking plate (2) also being provided with position holding means able to allow for exclusive vertical displacement of said plate, consisting preferably of an intermediate hollow cylinder (6) made preferably of a metal such as stainless steel or similar, witn fixed position with respect to the vehicle handlebar (4), of adequate dimensions to house without gaps said locking plate (2) between its lower end and said interior shaft (3) interior end, which is provided with a opening (9) allowing for the introduction of a lock plate (2) through same, aligned with opening (7) provided on vehicle handlebar (4) and, also aligned, when vehicle is at at standstill, with opening (8) located on handlebar (4) handgrip (1), **and in that** the fastening means between the interior cylindrical shaft (3) and the locking plate (2) consist of a small pivot (10) projecting out of the interior end of said cylindrical shaft (3) perpendicular to its base, with adequate dimensions as to be housed permanently in the horizontal groove (2c) of the locking plate (2), and passing through said horizontal groove (2c).

2. Antitheft device for motor vehicles with a throttle in the handlebar, according to the first claim, **characterized in that** the dimensions of the locking plate (2) match the dimensiones of the intermediate hollow cylinder (6) cross section.

3. Antitheft device for motor vehicles with a throttle in the handlebar handgrip, according to first claim, **characterized in that** the locking plate has, preferably, a maximum height 9 times the minimum thickness and a maximum width 7 times the minimum thickness.

4. Antitheft device for motor vehicles with a throttle in the handlebar handgrip, according to first claim, **characterized in that** said intermediate hollow cylinder (6) is mountes on the vehicle handlebar (4) by any adequate fastening means such as welding, through bolt, ratchet device with housing for at least a shoulder with a spring or similar.

5. Antitheft device for motor vehicles with a throttle in the handlebar handgrip, according to first claim, **characterized in that** said intermediate hollow cylinder (6) is part of the vehicle handlebar (4) structure.

6. Antitheft device for motor vehicles with a throttle in the handlebar handgrip, according to first claim, **characterized in that** the turning angle α of the interior shaft (3) corresponds to the pivot (10) displacement from one end of the horizontal groove (2c) in the locking plate (2) to the other end, able to produce the sliding of the locking plate (2) from its locking position to the release position and viceversa.

7. Antitheft device for motor vehicles with a throttle in the handlebar handgrip, according to first claim, **characterized in that** the locking plate (2), when in locking position projects sufficiently, preferably 1/4 of its height, from the lock (6) cylinder exterior surface to extend out of the handlebar (4) tube and into the throttle handgrip widow coming out of same, while in the release position said locking plate (2) does not project out of the lock cylinder (6).

8. Antitheft device for motor vehicles with a throttle in the handlebar handgrip, according to first claim, **characterized in that** the gap between the intermediate hollow cylinder (6) and the interior shaft (3) is provided preferably with conventional lubrication means such as oil, synthetic or natural grease or similar, to permit a wearless friction of the locking plate (2).
